# EUROPÄISCHE PATENTSCHRIFT

(11) **EP 1 415 134 B1**
(45) Veröffentlichungstag und Bekanntmachung des Hinweises auf die Patenterteilung: **26.03.2008**
(21) Anmeldenummer: 02794582.3
(22) Anmeldetag: 07.08.2002
(51) Int. Cl.: G01L 3/10, G01L 3/14

(54) **VORRICHTUNG ZUR MESSUNG VON BELASTUNGEN AN ROTIERENDEN BAUTEILEN**
DEVICE FOR MEASURING LOADS APPLIED TO ROTATING COMPONENTS
DISPOSITIF DE MESURE DE CHARGES SUR DES COMPOSANTS EN ROTATION

(30) Priorität: 10.08.2001 DE 10139524
(43) Veröffentlichungstag der Anmeldung: 06.05.2004
(73) Patentinhaber: SMS Demag Aktiengesellschaft, 40237 Düsseldorf (DE); Acida-Torqcontrol GmbH, 52134 Herzogenrath (DE)
(72) Erfinder: MACKEL, Jerry, 52074 Aachen (DE); FIEWEGER, Martin, 52134 Herzogenrath-Kohlscheid (DE)
(74) Vertreter: Klüppel, Walter
(86) Internationale Anmeldenummer: PCT/EP2002/008846
(87) Internationale Veröffentlichungsnummer: WO 2003/014685

(56) Entgegenhaltungen:
- EP-A- 0 291 344
- DE-A- 19 857 770

## Beschreibung

Die Erfindung betrifft eine Meßvorrichtung zur Erfassung von Belastungen, insbesondere Drehmoment, Biegemoment und Axialkraft an rotierenden Bauteilen wie Wellen, Spindeln oder Zapfen, mit der die sich unter Belastung ergebende Längenänderung mit Hilfe wenigstens eines auf dem Bauteil befestigten Dehnungsmeßstreifen gemessen und berührungslos erfaßt wird, wobei für die berührungslose Einspeisung der Versorgungsenergie für den Dehnungsmeßstreifen sowie die ebenfalls berührungslose Übertragung der Meßwerte an eine Auswerteeinheit eine Rotorelektronik vorgesehen ist, die in einem oder mehreren, den Dehnungsmeßstreifen umgreifenden Ring angeordnet ist, wobei der oder die Schutzring/e einseitig abstützbar auf dem Bauteil angeordnet sind oder verformungsweich in Bezug auf das Bauteil ausgebildet sind.

Aus der sich infolge der Belastung ergebenden elastischen Verformung eines Bauteils resultiert eine Längenänderung eines oder mehrerer auf dem Bauteil befestigten Dehnungsmeßstreifen (DMS). Mit Hilfe deren proportionaler Widerstandsänderung wird die Belastung von einer mitrotierenden Rotorelektronik gemessen, wobei eine berührungslose Übertragung der Meßwerte auf eine statische Auswerteeinheit sowie eine ebenfalls berührungslose Einspeisung der Versorgungsenergie auf die Rotorelektronik vorgesehen ist. Die Rotorelektronik, die dazugehörige Sende- und Empfangsantenne, ebenso wie die Verkabelung derselben sind in einem oder mehreren, die DMS umgreifenden Ringen angeordnet. Der oder diese Ringe haben sowohl eine Systemträger- als auch eine Schutzfunktion.

Die Meßvorrichtung der gattungsgemäßen Art wird an rotierenden Bauteilen, wie Wellen, Spindeln oder Zapfen eingesetzt, wenn andere Meßverfahren, häufig wegen der schlechten Umgebungsbedingungen, nicht angewendet werden können. Es ist in der Meßtechnik üblich, die sich aus den wirksamen Kräften in einem Bauteil ergebenden elastischen Formänderungen mittels DMS zu erfassen, indem der elektrische Widerstand in dem Dehnungsmeßstreifen gemessen wird. Die Längenänderung des mit dem Bauteil verbundenen, (i.a. geklebt, geklemmt oder geschweißt), DMS führen bei elastischen Formänderungen des Bauteils zur Veränderung des elektrischen Widerstandes, dessen Größe ein Maß für die wirksame Belastung und für die elastische Verformung des Bauteils ist. Die belastungsproportionale Widerstandsänderung wird mittels einer Brückenschaltung gemessen.

Diese bekannte Meßmethode wird auch zur Messung von Drehmomenten verwendet, indem der Dehnungsmeßstreifen auf die Oberfläche des betreffenden Bauteils geklebt wird und die sich infolge der Schubspannungen in 45 Grad zur Umfangsrichtung ergebenden Längenänderung wird über die belastungsproportionalen Widerstandsänderungen erfaßt. Die Biegemomente und Axialkräfte lassen sich analog, jedoch mit geänderter Positionierung der Dehnungsmeßstreifen und entsprechender Meßbrückenverschaltung erfassen. Das Verhältnis zwischen der Bauteilbelastung und der erfaßten Widerstandsänderung an den DMS wird mittels einer Verformungsberechnung auf der Grundlage der Bauteilgeometrie und des Bauteilwerkstoffs kalkuliert, oder kann mittels Kalibrierung, d.h. durch Aufbringen einer definierten Belastung und Abgleichen des Meßergebnisses ermittelt werden. Als Verformungsberechnung werden bei einfacher Bauteilgeometrie die bekannten Gleichungen aus der Festigkeitslehre, oder bei anderer Bauteilgeometrie Berechnungen nach der Methode der Finiten Elemente eingesetzt.

Üblicherweise werden die Dehnungsmeßstreifen mit einer Rotorelektronik verkabelt, die in einem oder mehreren Ringen angeordnet sind, welche die DMS umgeben und gleichzeitig vor den Umgebungseinflüssen schützt. Um dem Meßsystem einen ausreichenden mechanischen Schutz zu bieten sind die Ringe massiv aus Kunststoff, Verbundwerkstoff oder Metall gefertigt, bei extremen Einsätzen immer aus Stahl oder Aluminium, wobei mindestens der Ring, der die Antenne trägt, aus einem nicht leitenden Werkstoff bestehen muß. Der auf dem Bauteil aufsitzende Ring hat also zunächst die Aufgabe, den DMS zu umschließen und damit zu schützen. Darüber hinaus trägt er die elektronischen Komponenten der Meßeinrichtung. Diese können jedoch entsprechend konstruktiven oder betriebsmäßigen Erfordernissen auch in einem oder mehreren zusätzlichen Ringen eingebaut sein. Diese können konzentrisch auf dem ersten, den DMS umgebenden Ring aufsetzen oder aber axial versetzt direkt auf das Bauteil montiert werden. Ebenso können die DMS einer Meßbrücke, je nach Meßaufgabe auf mehrere Ringe verteilt werden. Als Schutz vor eindringenden Flüssigkeiten, wie Schmiermittel oder Wasser, weisen der oder die Ringe bauteilseitig eine Dichtfläche auf. Bei der Montage werden die Ringe um das Bauteil gelegt und derart verspannt, daß die Dichtfläche auf die Bauteiloberfläche gepresst wird. Dabei ist es üblich, daß zwischen der Dichtfläche und dem Bauteil Dichtmaterial eingesetzt wird, wie zähflüssiges und aushärtendes Silikon oder Elastomermatte. Um eine ausreichende Dichtwirkung zu erzielen und ein Verrutschen des oder der Ringe bei Anlagenbetrieb zu verhindern, wird die Dichtfläche ausreichend groß ausgelegt und beim Verspannen eine erhebliche Flächenpressung zwischen der Dichtfläche und dem Bauteil aufgebaut. Zum Verspannen sind der oder die Ringe i.a. einmal oder mehrfach in Ringsegmente geteilt. Die Verspannkraft wird dadurch aufgebaut, indem die Ringsegmente miteinander verspannt, i.a. verschraubt werden.

Es hat sich gezeigt, daß sich bei den bisher verwendeten Ringen aufgrund der Verspannung von dem oder den die DMS umschließenden Ring(en) und dem Bauteil ein Kraftschluß besteht und daraus eine zusätzliche Versteifung des Bauteils resultiert. Diese Versteifung kann je nach Bauteilgeometrie über 100% der ursprünglichen Bauteilsteifigkeit betragen. Entsprechend der Versteifung verändert sich die elastische Verformung des Bauteils innerhalb des umschließenden Rings und die gemessene Widerstandsänderung am DMS, d.h. das Meßergebnis wird durch den oder die aufgebrachten Ringe verfälscht. Der versteifende Einfluß der Ringe kann i.a. nicht exakt ermittelt werden, da der sich einstellende Kraftfluß über den oder die Ringe nicht quantitativ bestimmen läßt, der Kraftfluß sich mit jeder Montage verändert und der Kraftfluß zeitlich variiert wegen der sich verändernden Verhältnissen im Fügespalt, beispielsweise durch Alterung der Dichtmaterialien, Werkstofflcriechen, Kontaktkorrosion oder durch Setzvorgänge.

Aus dem Dokument DE 198 57 770 A1 ist eine Drehmomentmeßvorrichtung an rotierenden Bauteilen, wie Wellen oder Zapfen bekannt mit der die sich infolge der elastischen Verformung des Bauteils ergebende Längenänderung eines auf dem Bauteil befestigten Dehnungsmeßstreifen mit Hilfe dessen proportionaler Widerstandsänderung gemessen und berührungslos erfasst wird, wobei für die berührungslose Einspeisung der Versorgungsenergie für den Dehnungsmeßstreifen sowie die ebenfalls berührungslose Rückübertragung der Meßwerte an eine Auswerteeinheit eine Rotorelektronik vorgesehen ist, die in einem den Dehnungsmeßstreifen umgreifenden Kunststoffring angeordnet ist. Dabei ist der Dehnungsmeßstreifen zu seinem Schutz von einem formstabilen gegen das Bauteil beidseitig des Dehnungsmeßstreifens abgedichteten Metallschutzring umgeben, der seinerseits koaxial auf seinem Umfang den die Rotorelektronik aufnehmenden Kunststoffring trägt. Dieser Schutzring verursacht im allgemeinen eine zusätzliche Versteifung des Bauteils und führt zu verfälschten Messergebnissen.

Aus dem Dokument EP 0 291 344 A2 ist eine Vorrichtung zur Messung des Drehmoments an einem Bauteil bekannt mit einem Ring, der die Dehnungsmeßstreifen und die dazugehörige Elektronik umschließt. Der Ring ist einseitig kraftschlüssig auf dem Bauteil angeordnet. Auf der anderen Seite ist der Ring nicht am Bauteil befestigt und bildet einen Spalt zwischen Ring und Bauteil aus. Wegen diesen Spaltes können Einflüsse aus der Umgebung das Messergebnis verfälschen.

Ausgehend von dem dargestellten Problem und den Nachteilen des Standes der Technik besteht die Aufgabe der vorliegenden Erfindung darin, eine Meßvorrichtung der gattungsgemäßen Art so zu verbessern, daß das Meßergebnis nicht von der Meßeinrichtung, insbesondere nicht von den Schutz- und Trägerringen beeinflußt wird.

Zur Lösung der Aufgabe wird erfindungsgemäß vorgeschlagen, dass der oder die Dehungsmeßstreifen von einem formstabilen, den Dehnungsmeßstreifen gegen das Bauteil beidseitig abdichtenden Schutzring umgeben ist, wobei die beidseitig der Dehnungsmeßstreifen angeordneten Dichtstege des Schutzrings derart asymmetrisch ausgeformt sind, dass ein Steg den Kraftschluß und damit die sichere Verbindung zum Bauteil herstellt und der andere Steg den Schutzring mit schmaler Auflagefläche gegen das Bauteil abstützt. Hierdurch entsteht kein Kraft- oder Momentenfluß über den Schutzring, sondern die Belastung wird vollständig und ausschließlich vom Bauteil übertragen. Von Vorteil ist, die Dichtflächen zwischen Ring(en) und Bauteil asymmetrisch zu gestalten, wobei eine Seite der Dichtfläche breit ausgeführt ist, um einen sicheren Sitz des/der Schutzringe auf dem Bauteil und gleichzeitig mittels eines engen Dichtspalts die Dichtfunktion zu gewährleisten. Die andere Seite des/der Schutzringe ist als schmaler Steg ausgeführt, der ausschließlich eine Stützwirkung übernimmt, jedoch aufgrund seiner geringen Abmessungen keine Belastung vom Bauteil auf den/die Ringe überträgt.

Es ist hinter dem schmalen Steg ringinnenseitig eine breitere Dichtfläche vorgesehen, die mit Hilfe eines Dichtmaterials mit ausreichender Dichtstärke den Dehnungsmeßstreifen vor dem Eindringen von Flüssigkeiten schützt, jedoch keinen direkten Kontakt zum Bauteil hat und damit ebenfalls die Belastung vom Bauteil nicht aufnehmen kann. Durch die einseitige Abstützung des/der Schutzringe wird gewährleistet, daß das Bauteil an der Stelle, an der die DMS appliziert sind, die volle Belastung überträgt und damit keine Meßergebnisverfälschung stattfindet.

Es kann auch vorgesehen werden, den oder die Ringe, die die DMS umschließen durch konstruktive Maßnahmen oder gezielte Werkstoffauswahl oder durch ganz oder teilweise Integration von Elastomereinsätzen derart verformungsweich zu gestalten, daß sie für die zu erfassende Belastung im Vergleich zum Bauteil eine vernachlässigbare Bauteilfestigkeit aufweisen. Dazu wird erfindungsgemäß der Querschnitt des oder der Schutzringe an einer vorgebaren Stelle in der Weise geschwächt, daß die Ringhälften der beiden Dichtstege verformungsweich zueinander sind. Alternativ zur konstruktiven Lösung kann der Ring komplett oder Teile davon aus einem verformungsweichen, elastischen Werkstoff ausgeführt werden. Die Stege können in beiden Fällen unverändert gegenüber den bisherigen Systemen gestaltet werden. Idealerweise wird der Schutzring aus einem verformungsweichen, jedoch elastischen Werkstoff, wie Polyamid oder Aluminium gefertigt. Die Erfindung erlaubt es, die von dem/den Schutzringen übertragene Belastungsanteile auf ein vernachlässiges Maß zu reduzieren, und damit ein exaktes und reproduzierbares Meßergebnis zu erhalten.

Während es beim Stand der Technik bei der Montage von Schutz- und Systemträgerringen aufgrund der Beeinflussung des vom Bauteil übertragenen Kraftflusses zu einer erheblichen Verfälschung des Meßergebnisses kommt, wird dieser prinzipbedingte Nachteil mit Hilfe der Meßvorrichtung nach der Erfindung vermieden. Die erfindungsgemäße Ausführung des/der Schutzringe gewährleistet, daß die volle Belastung über das Bauteil geführt wird und damit die der Auslegung des Meßsystems zugrundegelegten Materialdehnung am Ort der DMS belastungsproportional erfaßt wird. Dadurch wird - wie zuvor gesagt - die Meßgenauigkeit und die Aussagefähigkeit der Meßergebnisse deutlich verbessert.

Einige Ausführungsbeispiele der Erfindung sind in schematisierten Zeichnungen dargestellt und werden nachfolgend beschrieben. Es zeigen:
- Figuren 1:: die erfindungsgemäße Meßvorrichtung mit einem Schutzring mit
- (a bis c): asymmetrischen Dichtstegen zur Montage auf dem Bauteil,
- Figuren 2:: die erfindungsgemäße Meßvorrichtung mit einem Schutzring mit
- (a bis h): asymmetrischen Dichtstegen zur Montage auf dem Bauteil und mit einem separaten, konzentrisch aufsitzenden Trägerring,
- Figuren 3:: die erfindungsgemäße Meßvorrichtung mit einem Schutzring mit
- (a bis c): verkleinertem, verformungsweichen Ringquerschnitt und konventionellen Dichtstegen.

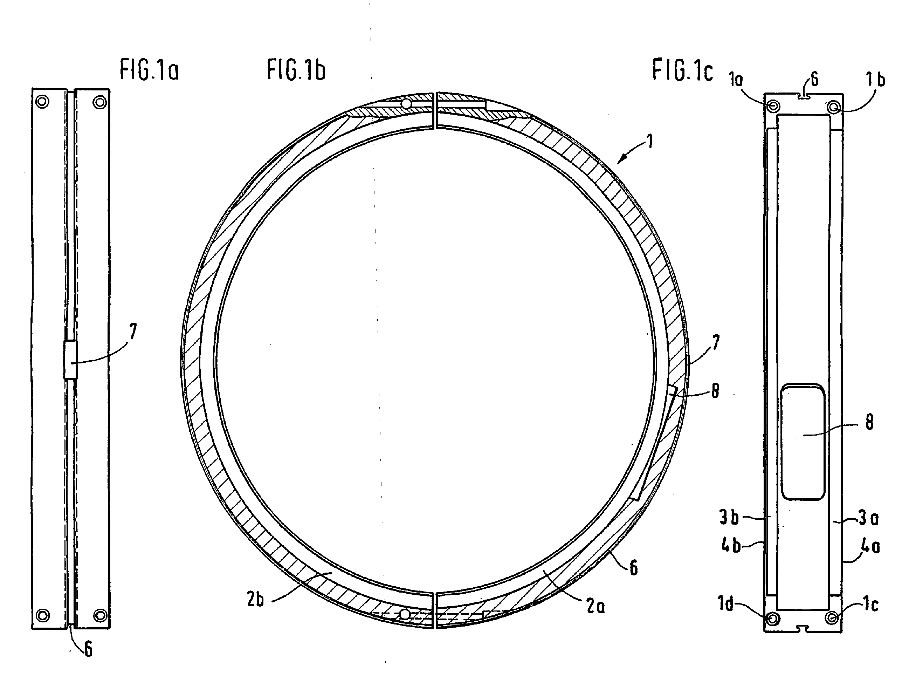

In den Figuren 1a bis 1c ist ein Schutzring 1 dargestellt, der zur Verspannung auf einer nicht gezeigten Antriebswelle zweigeteilt ist. Zur Montage dienen Verschraubungen, die in den dafür vorgesehenen Bohrungen 1 a, 1b, 1 c und 1d eingesetzt werden. Diese Verschraubungen bringen die zur Verspannung der beiden Ringhalbschalen 2a und 2b auf der Antriebswelle erforderlichen Kräfte auf. Beim Verspannen legen sich die breiten Dichtflächen 3a und die schmalen Dichtflächen 3b der Dichtstege 4a und 4b auf dem Wellenumfang an. Der breite Dichtsteg 4a sitzt dabei ausreichend fest auf der Welle, um den Schutzring gegen Verrutschen zu sichern. Der schmale Dichtsteg 4b stützt den Schutzring gegen die Welle ab, ohne jedoch einen Kraftschluß zu bewirken. Die Ringfläche 5, innen neben dem schmalen Steg 4b, behält durch die Abstützung einen gewissen Abstand zur Wellenoberfläche. Der dadurch entstehende schmale Hohlraum wird bei der Montage mit einer Dichtmasse ausgefüllt. Der Schutzring beinhaltet außerdem die hinterdrehte, umlaufende Nut 6, die die Sende- bzw. Empfangsantenne, im allgemeinen ein Kupferband, der Rotorelektronik aufnimmt. Zum Einführen der Antenne ist eine zusätzliche Aussparung 7 an der Ringoberfläche vorgesehen, wo auch die von der Rotorelektronik kommenden Antennenkabel an die Antenne angeschlossen werden. Die Rotorelektronik wird in einem Metallgehäuse geschützt, auf der dafür vorgesehenen Fläche 8 im Ringinnern befestigt und mit dem DMS verkabelt.

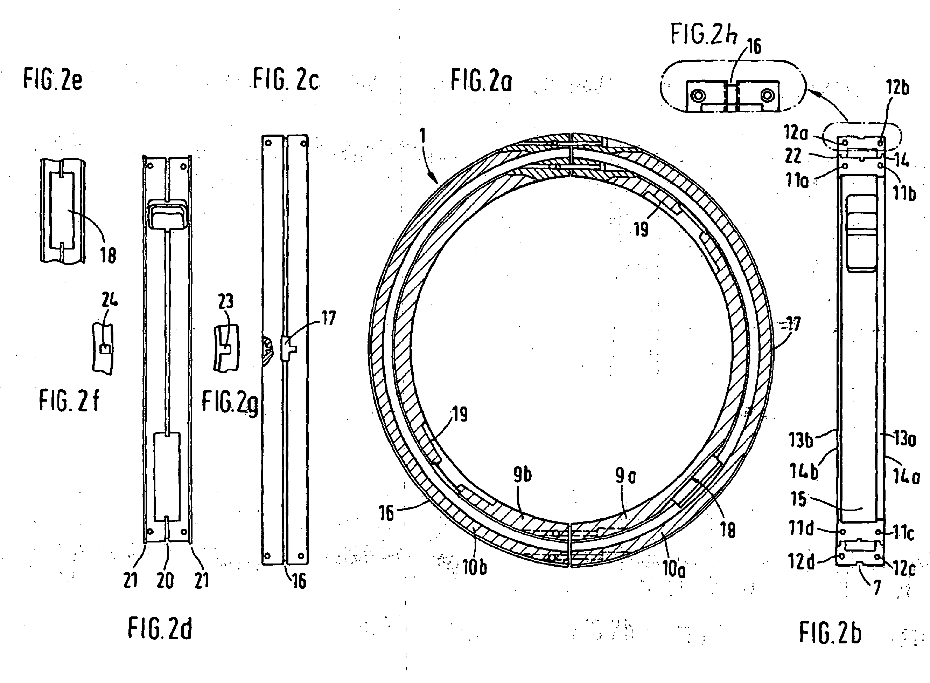

Die Figuren 2a bis 2h zeigen beispielhaft eine Doppelringkonstruktion, wobei die Ringe 9, 10 konzentrisch aufeinander aufsetzen. Zur Montage dienen Verschraubungen, die in den dafür vorgesehenen Bohrungen 11a bis 11 d für den inneren Ring 9 und in den Bohrungen 12a bis 12d für den äußeren Ring 10 eingesetzt werden. Diese Verschraubungen bringen die zur Verspannung der inneren Ringhalbschalen 9a und 9b auf der Antriebswelle bzw. der äußeren Ringhalbschalen 10a und 10b auf dem inneren Ring 9 erforderlichen Kräfte auf. Beim Verspannen des inneren Rings auf der Welle legen sich die breiten Dichtflächen 13a und schmalen Dichtflächen 13b der Dichtstege 14a und 14b des inneren Rings 9 auf dem Wellenumfang an. Der breite Dichtsteg 14a sitzt dabei ausreichend fest auf der Welle, um den Ring 9 gegen Verrutschen zu sichern. Der schmale Dichtsteg 14b stützt den Ring gegen die Welle ab, ohne jedoch einen Kraftschluß zu bewirken. Die Ringfläche 15, innen zwischen den Stegen, behält durch die Abstützung einen gewissen Abstand zur Wellenoberfläche. Der dadurch entstehende schmale Hohlraum wird bei der Montage mit einer Dichtmasse ausgefüllt.

Der äußere Ring mit den Ringhalbschalen 10a und 10b beinhaltet die hinterdrehte, umlaufende Nut 16, die die Sende- bzw. Empfangsantenne, im allgemeinen ein Kupferband, der Rotorelektronik aufnimmt. Zum Einführen der Antenne ist eine zusätzliche Aussparung 17 an der Ringoberfläche vorgesehen, wo auch die von der Rotorelektronik kommenden Antennenkabel an die Antenne angeschlossen werden. Die Rotorelektronik wird in einem Metallgehäuse geschützt, auf der dafür vorgesehenen Fläche 18 auf der Außenfläche des inneren Rings befestigt und mit den DMS, die in den Aussparungen 17 sitzen, verkabelt. Alternativ kann die Rotorelektronik auch auf der Innenseite des äußeren Ringes befestigt werden. Die auf dem Innenring umlaufende Nut 20 dient der Kabelführung. Der Innenring enthält zudem auf der Außenseite beidseitig die Abschlußstege 21. Der Außenring weist die dazu passenden Abdrehungen 22 auf. Dadurch wird ein ungewolltes axiales Verschieben der Ringe zueinander vermieden. Außerdem ist am Außenring eine Verdrehsicherung 23 vorgesehen, die in die Aussparung 24 am Innenring eingreift.

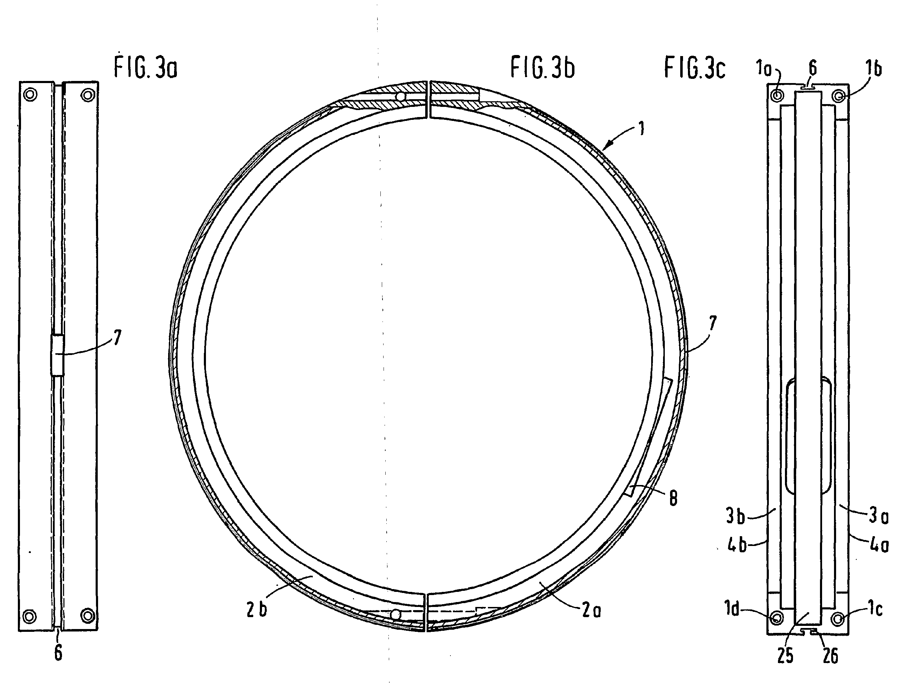

In den Figuren 3a bis 3c ist ein Einzelring dargestellt, der zur Verspannung auf einer nicht gezeigten Antriebswelle zweigeteilt ist. Zur Montage dienen Verschraubungen, die in den dafür vorgesehenen Bohrungen 1 a, 1b, 1 c und 1d eingesetzt werden. Diese Verschraubungen bringen die zur Verspannung der beiden Ringhalbschalen 2a und 2b auf der Welle erforderlichen Kräfte auf. Beim Verspannen legen sich die beiden Dichtflächen 3a und 3b der Dichtstege 4a und 4b auf dem Wellenumfang an. Beide Dichtstege 4a, 4b sitzen dabei ausreichend fest auf der Welle, um den Ring gegen Verrutschen zu sichern. Innenseitig ist der Schutzring mittels eingearbeiteter Nut 25 derart gezielt geschwächt, daß der tragende Ringquerschnitt in der Wellenmitte 26 klein ist gegenüber dem Wellenquerschnitt. Der Ring beinhaltet außerdem die hinterdrehte, umlaufende Nut 6, die die Sende- bzw. Empfangsantenne, im allgemeinen ein Kupferband, der Rotorelektronik aufnimmt. Zum Einführen der Antenne ist eine zusätzliche Aussparung 7 an der Ringoberfläche vorgesehen, wo auch die von der Rotorelektronik kommenden Antennenkabel an die Antenne angeschlossen werden. Die Rotorelektronik wird in einem Metallgehäuse geschützt, auf der dafür vorgesehenen Fläche 8 im Ringinnern befestigt und mit dem DMS verkabelt.

### Bezugszeichenliste

- 1: Schutzring
- 1 a, 1b, 1c, 1d: Bohrungen für Verschraubungen
- 2a, 2b: Ringhalbschalen
- 3a: breite Dichtfläche
- 3b: breite Dichtfläche
- 4a: breiter Dichtsteg
- 4b: schmaler Dichtsteg
- 5: innere Ringfläche
- 6: hinterdrehte Nut
- 7: Aussparung für Antenne
- 8: Fläche für Rotorelektronik
- 9a, 9b: Ringhalbschalen innerer Ring
- 10a, 10b: Ringhalbschalen äußerer Ring
- 11 a bis 11 d: Bohrungen für Verschraubungen
- 12a bis 12d: Bohrungen für Verschraubungen
- 13a: breite Dichtfläche
- 13b: schmale Dichtfläche
- 14a: breiter Dichtsteg
- 14b: schmaler Dichtsteg
- 15: Ringfläche
- 16: hinterdrehte Nut
- 17: Aussparung
- 18: Fläche für Rotorelektronik
- 19: Aussparung für DMS
- 20: umlaufende Nut für Kabelführung
- 21: Abschlußstege
- 22: Abdrehung
- 23: Verdrehsicherung
- 24: Aussparung für Verdrehsicherung
- 25: Schwächungsnut
- 26: Wellenmitte

## Patentansprüche

1. Meßvorrichtung zur Erfassung von Belastungen, insbesondere Drehmoment, Biegemoment und Axialkraft an rotierenden Bauteilen, wie Wellen, Spindeln oder Zapfen, mit der die sich unter Belastung ergebende Längenänderung mit Hilfe wenigstens eines auf dem Bauteil befestigten Dehnungsmeßstreifen gemessen und berührungslos erfaßt wird, wobei für die berührungslose Einspeisung der Versorgungsenergie für den Dehnungsmeßstreifen sowie für die ebenfalls berührungslose Übertragung der Meßwerte an eine Auswerteeinheit eine Rotorelektronik vorgesehen ist, die in einem oder mehreren, den Dehnungsmeßstreifen umgreifenden Schutzring (1) angeordnet ist, wobei der oder die Schutzringe (1) einseitig abstützbar auf dem Bauteil angeordnet sind oder verformungsweich in Bezug auf das Bauteil ausgebildet sind,
**dadurch gekennzeichnet,**
**daß** der oder die Dehnungsmeßstreifen von einem formstabilen, den Dehnungsmeßstreifen gegen das Bauteil beidseitig abdichtenden Schutzring (1) umgeben ist, wobei die beidseitig der Dehnungsmeßstreifen angeordneten Dichtstege (4a, 4b) des Schutzrings derart asymmetrisch ausgeformt sind, daß ein Steg (4a) den Kraftschluß und damit die sichere Verbindung zum Bauteil herstellt und der andere Steg (4b) den Schutzring mit schmaler Auflagefläche (3b) gegen das Bauteil abstützt.

2. Meßvorrichtung nach Anspruch 1,
**dadurch gekennzeichnet,**
**dass** der Querschnitt des oder der Schutzringe an einer vorgebbaren Stelle in der Weise geschwächt ist, dass die Ringhälften der beiden Dichtstege verformungsweich zueinander sind

3. Meßvorrichtung nach Anspruch 1 oder 2,
**dadurch gekennzeichnet,**
**daß** der oder die Schutzringe (1) hermetisch um die Dehnungsmeßstreifen abschließen.

4. Meßvorrichtung nach einem oder mehreren der Ansprüche 1 bis 3,
**dadurch gekennzeichnet,**
**daß** der oder die Schutzringe (1) aus zwei oder mehreren Ringsegmenten (2a, 2b) bestehen, die mittels Schraubverbindungen und/oder Gelenken um ein Bauteil spannbar und lösbar ausgebildet ist.

5. Meßvorrichtung nach einem oder mehreren der Ansprüche 1 bis 4,
**dadurch gekennzeichnet,**
**daß** mehrere Schutzringe (9, 10) konzentrisch aufeinander oder axial nebeneinander um das Bauteil herum angeordnet sind.

6. Meßvorrichtung nach einem oder mehreren der Ansprüche 1 bis 5,
**dadurch gekennzeichnet,**
**daß** im Innern der Schutzringe die Rotorelektronik zum Schutz gegen Umwelteinflüsse angeordnet ist.

7. Meßvorrichtung nach einem oder mehreren der Ansprüche 1 bis 6,
**dadurch gekennzeichnet,**
**daß** in einer umlaufenden, hinterdrehten Nut (6) des Schutzringes die Sende- und Empfangsantenne der Rotorelektronik montiert ist und diese zur Demontage, d.h. zum Öffnen der Schutzringe aus dieser Nut (6) entnehmbar ist.

## Claims

1. Measuring device for detection of loads, particularly torque, bending moment and axial force, at rotating components, such as shafts, spindles or pins, by which the length change resulting under load is measured and contactlessly detected with the help of at least one strain gauge fastened on the component, wherein an electronic rotor system arranged in one or more protective rings (1) engaging around the strain gauges is provided for contactless feed of supply energy for the strain gauges and for the similarly contactless transmission of the measurement values to an evaluating unit, wherein the protective ring or rings (1) is or are arranged to be able to be supported at one side on the component or is or are constructed to be soft in terms of deformation with respect to the component, **characterised in that** the strain gauge or gauges is or are surrounded by a support ring which is stable in shape and seals the strain gauges or gauges at both sides relative to the component, wherein the sealing webs (4a, 4b), which are arranged at both sides of the strain gauges, of the protective ring are of asymmetrical shape in such a manner that one web (4a) produces the force couple and thus the secure connection with the component and the other web (4b) supports the protective ring by a narrower support surface (3b) relative to the component.

2. Measuring device according to claim 1, **characterised in that** the cross-section of the support ring or rings is weakened at a predeterminable location in the manner that the ring halves of the two sealing webs are soft in deformation relative to one another.

3. Measuring device according to claim 1 or 2, **characterised in that** the protective ring or rings (1) hermetically seal around the strain gauges.

4. Measuring device according to one or more of claims 1 to 3, **characterised in that** the protective ring or rings (1) consists or consist of two or more ring segments (2a, 2b), which are constructed to be tightenable and loosenable around a component by means of screw connections and/or joints.

5. Measuring device according to one or more of claims 1 to 4, **characterised in that** several protective rings (9, 10) are arranged concentrically on one another or axially adjacent to one another around the component.

6. Measuring device according to one or more of claims 1 to 5, **characterised in that** the electronic rotor system for protection against environmental influences is arranged in the interior of the protective rings.

7. Measuring device according to one or more of claims 1 to 6, **characterised in that** the transmitting and receiving antenna of the electronic rotor system is mounted in an encircling undercut groove (6) of the protective ring and the antenna is removable from this groove (6) for disassembly, i.e. for opening the protective rings.

## Revendications

1. Dispositif de mesure pour la détermination de charges, en particulier de couples de rotation, de couples de flexion et de forces axiales sur des composants en rotation, comme des arbres, des broches ou des tourillons, au moyen duquel la modification de longueur qui résulte sous charge est mesurée à l'aide d'au moins une jauge de contraintes fixée sur le composant et déterminée sans contact, dans lequel, pour l'injection sans contact de l'énergie d'alimentation pour la jauge de contraintes, ainsi que pour la transmission également sans contact des valeurs de mesure à une unité d'évaluation, il est prévu une unité électronique rotative qui est agencée dans une ou plusieurs bague(s) protectrice(s) (1) qui entoure(nt) la jauge de contraintes, ladite ou lesdites bague(s) protectrice(s) (1) étant agencée(s) de façon à pouvoir se soutenir d'un côté sur le composant, ou réalisée(s) de manière à pouvoir se déformer souplement par rapport au composant,
**caractérisé en ce que** la ou les jauge(s) de contraintes est/sont entourée(s) par une bague protectrice (1) stable quant à sa forme et assurant sur les deux côtés une étanchéité de la ou des jauge(s) de contraintes par rapport au composant, les barrettes d'étanchéité (4a, 4b), agencées des deux côtés des jauges de contraintes, de la bague protectrice étant conformées de façon asymétrique de telle façon qu'une barrette (4a) établit la coopération de forces et ainsi la liaison sûre vis-à-vis du composant, et l'autre barrette (4b) soutient la bague protectrice avec une surface d'appui étroite (3b) contre le composant.

2. Dispositif de mesure selon la revendication 1,
**caractérisé en ce que** la section de la ou des bague(s) protectrice(s) est affaiblie à un emplacement prédéterminé de telle manière que les moitiés de bagues des deux barrettes d'étanchéité sont capables de se déformer souplement l'une par rapport à l'autre.

3. Dispositif de mesure selon la revendication 1 ou 2,
**caractérisé en ce que** la ou les bague(s) protectrice(s) (1) se referme(nt) hermétiquement autour des jauges de contraintes.

4. Dispositif de mesure selon l'une ou plusieurs des revendications 1 à 3,
**caractérisé en ce que** la ou les bague(s) protectrice(s) (1) est/sont constituée(s) par deux ou plusieurs segments de bagues (2a, 2b) qui sont réalisés de manière à pouvoir être serrés et détachés autour d'un composant au moyen de liaisons vissées et/ou d'articulations.

5. Dispositif de mesure selon l'une ou plusieurs des revendications 1 à 4,
**caractérisé en ce que** plusieurs bagues protectrices (9, 10) sont agencées tout autour du composant concentriquement les unes sur les autres ou axialement les unes à côté des autres.

6. Dispositif de mesure selon l'une ou plusieurs des revendications 1 à 5,
**caractérisé en ce que** l'unité électronique rotative est agencée à l'intérieur des bagues protectrices pour la protection vis-à-vis des influences environnantes.

7. Dispositif de mesure selon l'une ou plusieurs des revendications 1 à 6,
**caractérisé en ce que** l'antenne d'émission et de réception de l'unité électronique rotative est montée dans une gorge circonférentielle (6) en contre-dépouille de la bague protectrice, et ladite antenne est susceptible d'être enlevée hors de ladite gorge (6) pour le démontage, c'est-à-dire pour ouvrir la bague protectrice.
